# EUROPÄISCHE PATENTSCHRIFT

(11) **EP 1 029 648 B1**
(45) Veröffentlichungstag und Bekanntmachung des Hinweises auf die Patenterteilung: **24.03.2004**
(21) Anmeldenummer: 00101213.7
(22) Anmeldetag: 21.01.2000
(51) Int. Cl.: B29C 51/10, B29C 51/16, B29C 49/24, B29C 49/18, B29C 63/06

(54) **Verfahren und Blasformwerkzeug zur Herstellung von Blasformteilen mit einer Dekorbeschichtung**
Method and blow moulding tool for the manufacture of blow moulded parts having a decorative layer
Methode et outil de moulage par soufflage pour le fabrication de pieces soufflées ayant un revêtement decoratif

(30) Priorität: 16.02.1999 DE 19906338
(43) Veröffentlichungstag der Anmeldung: 23.08.2000
(73) Patentinhaber: Möller Plast GmbH, 33649 Bielefeld (DE)
(72) Erfinder: Wrobbel, Werner, 33335 Gütersloh (DE)
(74) Vertreter: Schirmer, Siegfried, Dipl.-Ing.

(56) Entgegenhaltungen:
- EP-A- 0 369 023
- US-A- 3 072 969
- US-A- 4 323 411
- US-A- 5 804 127
- PATENT ABSTRACTS OF JAPAN vol. 014, no. 450 (M-1030), 27. September 1990 (1990-09-27) & JP 02 179721 A (DAIKYO INC), 12. Juli 1990 (1990-07-12)

## Beschreibung

Die Erfindung betrifft ein Verfahren zur Herstellung von Blasformteilen mit einer im sichtbaren Bereich vorgesehenen Dekorbeschichtung, bei dem während des Blasformens ein in die Kavität eines aus zwei Werkzeughälften gebildeten Blasformwerkzeugs eingelegtes Dekorbeschichtungsmaterial unter Druck an das Blasformteil angeformt und mit dessen Oberfläche verbunden wird, sowie ein Blasformwerkzeug zur Durchführung des Verfahrens.

Bei den bekannten Blasformverfahren wird in das zunächst geöffnete Werkzeug eine Dekorbeschichtung aus textilem Material, Leder, Folie oder anderen flächenhaften Gebilden und anschließend ein frisch extrudierter Kunststoffschlauch eingebracht. Nach dem Schließen des Blasformwerkzeugs und dem damit verbundenen Verschließen der stirnseitigen Öffnungen des Kunststoffschlauches wird in diesen Luft eingeblasen. Dadurch werden die Schlauchwände und damit auch das eingelegte Dekormaterial mit hohem Druck und bei hoher Temperatur an die Innenkonturen der von den beiden Werkzeughälften gebildeten Kavität gepreßt. Die hohe Druck- und Temperaturbelastung des Dekormaterials führt neben Farbänderungen zur Beeinträchtigung der Oberflächenstruktur und insbesondere bei schaumhinterfütterten Dekormaterialien zum Zusammenpressen der Dekorbeschichtung, so daß die elastische Wirkung der Schaumstoffunterlage verlorengeht. Bei vorzeitigem Kontakt zwischen dem sehr heißen Kunststoffschlauch und dem Dekormaterial ist eine vollflächige, verzerrungsfreie Beschichtung nicht gewährleistet.

Aus der Druckschrift US 4,323,411 ist ein Verfahren zum Herstellen von Blasformteilen bekannt, bei dem auf eine äußere Oberfläche eines vorgeformten Blasformteils Teile aufgebracht werden, die beispielsweise zu dekorativen Zwecken dienen. Nachdem die Teile aufgebracht sind, wird das vorgeformte Blasformteil in eine Kavität eingeführt und an die Innenkontur der Kavität mittels Blasformens angeformt. Hierbei werden die aufgebrachten Teile in die äußere Oberfläche des Blasformteils eingedrückt.

Aus der Druckschrift EP 0 369 023 ist ein Verfahren zum Herstellen eines Blasformteils zum Herstellen eines Blasformbehälters bekannt. Um den Blasformbehälter mit einem Etikett zu versehen, wird das Etikett in die zum Blasformen verwendete Kavität eingebracht und an der Innenkontur gehalten, so daß das Etikett anschließend beim Blasformen in die äußere Oberfläche des Blasformbehälters integriert wird. In ähnlicher Weise werden bei einem aus der Druckschrift US 3,027,969 bekannten Verfahren Bedruckungen oder dekorative Teile an einer Innenkontur eines Spritzwerkzeugs gehalten.

Der Erfindung liegt daher die Aufgabe zugrunde, ein Verfahren zur Herstellung von mit einer Dekorbeschichtung versehenen, durch Blasformen hergestellten Bauteilen anzugeben, das hinsichtlich der optischen und haptischen Ausbildung der Blasformteile im Bereich der Dekorbeschichtung hohen Qualitätsanforderungen gerecht wird. Ein weiteres Ziel besteht in der Entwicklung eines zur Durchführung des Verfahrens geeigneten Blasformwerkzeugs.

Erfindungsgemäß wird die Aufgabe - ausgehend von einem Verfahren zur Herstellung von Blasformteilen mit einer im sichtbaren Bereich vorgesehenen Dekorbeschichtung gemäß dem Oberbegriff des Patentanspruchs 1 - in der Weise gelöst, daß in einem mehrstufigen Prozeß in einer Blasformkavität unter Druck zunächst ein unbeschichtetes Blasformteil geformt wird und in einer im wesentlichen identisch ausgebildeten Dekorbeschichtungskavität das Dekorbeschichtungsmaterial an die Werkzeugkontur angelegt bzw. angeformt wird und anschließend bei verringertem Blasdruck in einer aus den Werkzeugkonturen der Blasform- und Dekorbeschichtungskavität gebildeten weiteren Werkzeugkavität an die Außenkontur des Blasformteils angeformt und mit diesem verbunden wird.

Das erfindungsgemäße Blasformwerkzeug zur Durchführung des Verfahrens ist durch eine von zwei ersten Werkzeugkonturen gebildete Blasformkavität zur Ausformung eines unbeschichteten Blasformteils und eine von zwei zweiten Werkzeugkonturen gebildete Dekorbeschichtungskavität zur Anformen bzw. Anlegen des Dekorbeschichtungsmaterials an die Werkzeugkontur gekennzeichnet, wobei die Dekorbeschichtungskavität gegenüber der Blasformkavität im Anformbereich des Dekorbeschichtungsmaterials um dessen Stärke erweitert ist.

Mit dem vorgeschlagenen Verfahren und dem entsprechend ausgebildeten Blasformwerkzeug können beschichtete Blasformteile hergestellt werden, deren Dekorbeschichtungsmaterial hinsichtlich Farbe und Struktur nicht durch die bei dem herkömmlichen Blasform- und Beschichtungsprozeß herrschenden hohen Drücke und Temperaturen beeinträchtigt wird. Insbesondere schaumhinterfütterte Dekorschichten behalten ihre ursprünglichen elastischen und damit haptisch vorteilhaften Eigenschaften bei. Das Dekorbeschichtungsmaterial wird darüber hinaus vollflächig und verzerrungsfrei mit dem Blasformteil verbunden. Damit werden beschichtete Blasformteile zur Verfügung gestellt, die hohen Qualitätsanforderungen in bezug auf ihre haptische und optische Ausbildung gerecht werden.

In vorteilhafter Weiterbildung der Erfindung erfolgt das enge Anlegen des Dekorbeschichtungsmaterials an die Werkzeugkontur in der Dekorbeschichtungskavität durch die Wirkung eines Vakuums auf das Beschichtungsmaterial. Das Dekorbeschichtungsmaterial paßt sich daher der Werkzeugkontur an und wird zudem an dieser gehalten. Eine Blasenbildung am Fertigteil wird vermieden.

Vorzugsweise wird das Dekorbeschichtungsmaterial zuvor oder innerhalb der Dekorbeschichtungskavität durch in dieser angeordnete Heizelemente erwärmt, um eine hohe Flexibilität und damit ein enges Anlegen an die Werkzeugkontur zu gewährleisten.

Die Verbindung des Dekorbeschichtungsmaterials mit dem Blasformteil kann unmittelbar mit dessen noch warmer Oberfläche oder an einer Koextrusionsschicht bei einem durch Koextrusion hergestellten Kunststoffschlauch und/oder unter Verwendung eines Haftvermittlers erfolgen.

Nach einem weiteren Merkmal der Erfindung ist das Blasformwerkzeug dreiteilig ausgebildet und besteht aus zwei Seitenteilen und einem zwischen diesen angeordneten Mittelteil, die jeweils verfahrbar oder verschwenkbar sind. Zwischen dem Mittelteil und dem einen Seitenteil wird die Blasformkavität durch entsprechende Werkzeugkonturen gebildet. Die Dekorbeschichtungskavität entsteht auf gleiche Weise zwischen dem anderen Seitenteil und der anderen Seite des Mittelteils. Die Saugwirkung auf das Dekorbeschichtungsmaterial geht von einer in dem betreffenden Seitenteil untergebrachten Vakuumkammer aus.

Weitere Merkmale und vorteilhafte Weiterbildungen der Erfindung ergeben sich aus der nachfolgenden Beschreibung einer beispielhaften Ausführungsform des Blasformwerkzeugs sowie aus den Unteransprüchen.

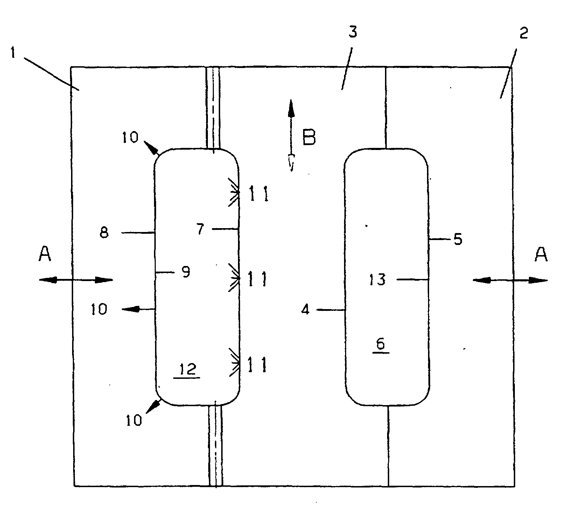

Ein Ausführungsbeispiel der Erfindung wird anhand der Zeichnung, in dessen einziger Figur ein dreiteiliges Werkzeug zur Herstellung eines Basformteils und zu dessen schonender Beschichtung auf einem Teilbereich mit einem Dekormaterial schematisch dargestellt ist, näher erläutert.

Gemäß der Zeichnung besteht das Werkzeug aus zwei in seitlicher Richtung verfahrbaren Seitenteilen 1 und 2 sowie einem zwischen diesen angeordneten Mittelteil 3. Das Mittelteil 3 ist senkrecht zur Bewegungsrichtung A der beiden Seitenteile 1 und 2, das heißt in Richtung des Pfeils B verfahrbar oder verschwenkbar. Das Seitenteil 2 und das Mittelteil 3 verfügen jeweils über eine erste Werkzeugkontur 4 und 5, die in zusammengefahrenem Zustand dieser beiden Werkzeugteile eine Blasformkavität 6 bilden, die der Außenkontur des zu fertigenden Blasformteils 15, jedoch ohne Dekorbeschichtung, entspricht.

Das Mittelteil 3 ist auf der gegenüberliegenden Seite mit einer zweiten Werkzeugkontur 7 versehen, die mit der Werkzeugkontur 5 des Seitenteils 2 übereinstimmt, während eine in dem Seitenteil 1 ausgebildete zweite Werkzeugkontur 8 gegenüber der ersten Werkzeugkontur 4 des Mittelteils 3 um die Schichtdicke des auf das Blasformteil aufzubringenden Dekorbeschichtungsmaterials 9 erweitert ist.

Mit den Pfeilen 10 an der Werkzeugkontur 8 sind Saugbffnungen 10 angedeutet, die mit einer Vakuumkammer in dem Seitenteil 1 und einem Vakuumerzeuger (jeweils nicht dargestellt) zum Anlegen einer Saugwirkung an das Dekorbeschichtungsmaterial 9 von der Werkzeugkontur 8 her verbunden sind. An der zweiten Werkzeugkontur 7 des Mittelteils 3 sind Heizelemente 11 vorgesehen, die zur Erwärmung des Dekorbeschichtungsmaterials 9 dienen.

Die Herstellung eines mit einer temperatur- und/oder druckempfindlichen Dekorbeschichtung zu versehenden Blasformteils 15 erfolgt nun in der Weise, daß in die Blasformkavität 6, und zwar in auseinandergefahrenem Zustand des Seitenteils 2 und des Mittelteils 3, ein frisch extrudierter (oder durch Koextrusion hergestellter) Kunststoffschlauch eingebracht wird. Mit dem Zusammenfahren der beiden Werkzeughälften 2 und 3 werden die Blasformkavität 6 und damit die beiden Stirnseiten des Kunststoffschlauches geschlossen. Anschließend wird Luft in die Blasformkavität 6 eingeblasen, so daß sich die Wandung des Kunststoffschlauches unter hohem Druck an die Werkzeugkonturen 4 und 5 anlegt.

Parallel zu der oben beschriebenen Ausformung des Blasformteils 15 wird bei ausgefahrenem Seitenteil 1 in die Dekorbeschichtungskavität 12 ein flächiges Dekorbeschichtungsmaterial 9 eingelegt und mit Hilfe der Heizelemente 11 erwärmt. Das Dekorbeschichtungsmaterial 9 kann aber auch bereits vorgewärmt in die Dekorbeschichtungskavität 12 eingebracht werden. Nach dem abdichtenden Schließen der Dekorbeschichtungskavität 12 wird über die Saugöffnungen 10 an das Dekorbeschichtungsmaterial 9 ein Vakuum angelegt, so daß sich das flexible Dekorbeschichtungsmaterial 9 eng an die Werkzeugkontur 8 des Seitenteils 1 anlegt und in dieser Lage gehalten wird. Der Einschluß von Luft zwischen der Werkzeugkontur 8 und dem Dekorbeschichtungsmaterial 9 wird verhindert. Durch den luftleer gesaugten Raum wird die Bildung von Luftblasen am Fertigteil verhindert.

Nach dem Ausformen und Erreichen einer Grundstabilität des Blasformteils 15 und des Dekorbeschichtungsmaterials 9 werden die Seitenteile 1 und 2 auseinandergefahren und das Mittelteil 3 wird herausgeschwenkt. Das Dekorbeschichtungsmaterial 9 und das Blasformteil 15 bleiben dabei in ihrer Position an den Werkzeugkonturen 8 bzw. 5. Während das Blasformteil 15 durch Hinterschneidungen oder Haltekerne (nicht dargestellt) fixiert ist, wird das Dekorbeschichtungsmaterial aufgrund der Vakuumwirkung gehalten. Die beiden Seitenteile 1 und 2 werden nun zusammengefahren, und nach dem Schließen der Form wird das noch warme Blasformteil 15 unter Luftzufuhr in dessen Inneres bei geringem Innendruck schonend an das Dekorbeschichtungsmaterial 9 gedrückt und mit diesem verbunden.

Das Blasformteil 15 kann aber auch zuvor mit einem Haftmittel beschichtet werden, um die Verbindung mit dem Dekorbeschichtungsmaterial sicherzustellen. Gleichermaßen ist es möglich, das Blasformteil aus einem durch Koextrusion gebildeten Kunststoffschlauch herzustellen. In diesem Fall übernimmt die koextrudierte Schicht die Funktion eines Haftvermittlers, wenn das eigentliche Blasform-teilmaterial nicht oder nur ungenügend an dem Dekorbeschichtungsmaterial haftet oder keinen geeigneten Haftgrund darstellt.

Aufgrund des geringen Innendrucks in der Dekorbeschichtungskavität beim Anformen des Blasformteils 15 an die Dekorbeschichtung werden selbst druck- und temperaturempfindliche Beschichtungsmittel, z.B. Textilien, schaumhinterfütterte Folie oder echtes Leder, nicht in ihrer Oberflächenstruktur und Farbe oder in der Schaumstruktur beeinträchtigt.

Die Erfindung ist nicht auf das vorstehend erläuterte Ausführungsbeispiel beschränkt. Vielmehr sind im Schutzbereich der Erfindung liegende Modifikationen denkbar. Beispielsweise können die Werkzeugkavitäten für das Dekorbeschichtungsmaterial und das Blasformteil auch in voneinander unabhängigen Werkzeugen untergebracht sein. Die oben beschriebene parallele Formgebung des Beschichtungsmaterials und des Blasformteils in demselben Werkzeug ist jedoch fertigungstechnisch und unter wirtschaftlichen Aspekten vorteilhaft.

Bei dem oben beschriebenen kombinierten Werkzeug kann zur Herstellung von Blasformteilen mit einer Hinterschneidung im Mittelteil 3 ein zur Dekorseite hin gerichteter Schieber (nicht dargestellt) vorgesehen sein, wobei das Seitenteil schwenkbar angeordnet ist. Das Seitenteil wird angehoben (angekippt) in Richtung Hinterschneidung vorgezogen oder vorgeschoben. Anschließend wird die Maschine zusammengefahren und das Seitenteil wird im Gleichlauf , zurückgezogen und abgesenkt. Die Werkzeugbereiche in der Trennung sind entsprechend abgeschrägt. Durch eine Kippbewegung wird eine Entformung der hinterschnittenen Bereiche ermöglicht.

Das Dekorbeschichtungsmaterial kann auch dreidimensional vorgeformt und an die Werkzeugkontur angepaßt sein, so daß es bereits eng an der Werkzeugkontur anliegt und nur durch das Vakuum gehalten werden muß.

### Aufstellung der Bezugszeichen:

- 1: Seitenteil
- 2: Seitenteil
- 3: Mittelteil
- 4: erste Werkzeugkontur von 3
- 5: erste Werkzeugkontur von 2
- 6: Blasformkavität
- 7: zweite Werkzeugkontur von 3
- 8: zweite Werkzeugkontur von 1
- 9: Dekorbeschichtungsmaterial
- 10: Saugöffnungen
- 11: Heizelemente
- 12: Dekorbeschichtungskavität
- 15: Blasformteil

## Patentansprüche

1. Verfahren zur Herstellung von Blasformteilen mit einer im sichtbaren Bereich vorgesehenen Dekorbeschichtung, bei dem während des Blasformprozesses ein in die Kavität eines aus zwei Werkzeughälften gebildeten Blasformwerkzeugs eingelegtes Dekorbeschichtungsmaterial unter Druck an das Blasformteil angeformt und mit dessen Oberfläche verbunden wird, **dadurch gekennzeichnet, daß** in einem mehrstufigen Prozeß in einer Blasformkavität (6) unter Druck zunächst ein unbeschichtetes Blasformteil (15) geformt wird und in einer im wesentlichen identisch ausgebildeten Dekorbeschichtungskavität (12) das Dekorbeschichtungsmaterial (9) an die Werkzeugkontur (8) angelegt bzw. angeformt und an dieser gehalten wird und anschließend in einer aus den Werkzeugkonturen der Blasform- und der Dekorbeschichtungskavität gebildeten Werkzeugkavität an die Außenkontur des Blasformteils angeformt und mit dieser verbunden wird.

2. Verfahren nach Anspruch 1, **dadurch gekennzeichnet, daß** das Dekorbeschichtungsmaterial (9) unter der Wirkung eines Vakuums an die betreffende Werkzeugkontur (8) in der abgedichteten Dekorbeschichtungskavität (12) angelegt wird.

3. Verfahren nach Anspruch 1 und 2, **dadurch gekennzeichnet, daß** das Dekorbeschichtungsmaterial (9) außerhalb oder innerhalb der Dekorbeschichtungskavität (12) erwärmt wird.

4. Verfahren nach einem der Ansprüche 1 bis 3, **dadurch gekennzeichnet, daß** das Dekorbeschichtungsmaterial (9) vorgeformt und in die Dekorbeschichtungskavität (12) eingebracht wird.

5. Verfahren nach einem der Ansprüche 1 bis 4, **dadurch gekennzeichnet, daß** die Verbindung zwischen dem Blasformteil (15) und dem Dekorbeschichtungsmaterial (9) unter Verwendung eines Haftvermittlers und/oder durch die noch heiße Oberfläche des Blasformteils hergestellt wird.

6. Verfahren nach einem der Ansprüche 1 bis 5, **dadurch gekennzeichnet, daß** eine zur Verbindung mit dem Dekorbeschichtungsmaterial (9) geeignete Oberfläche des Blasformteils (15) mit einer anderen, durch Koextrusion des Ausgangsschlauchs gebildeteten Oberflächenschicht geschaffen wird.

7. Verfahren nach einem der Ansprüche 1 bis 6, **dadurch gekennzeichnet, daß** ein zur Verbindung mit dem Dekorbeschichtungsmaterial (9) geeignetes Schaummaterial zuvor auf die Rückseite des Dekormaterials aufgebracht und diese Schaumschicht zur Verbindung von Dekorschicht und Trägerteil genutzt wird.

8. Verfahren nach einem der Ansprüche 1 bis 7, **dadurch gekennzeichnet, daß** in der Dekorbeschichtungskavität (12) zwischen dem Dekorbeschichtungsmaterial (9) und dem Blasformteil (15) ein Luftspalt gelassen wird, in dem zur Verbindung ein Schaumwerkstoff und/oder synthetischer Werkstoff eingebracht wird.

9. Verfahren nach einem der Ansprüche 1 bis 8, **dadurch gekennzeichnet, daß** in der Dekorbeschichtungskavität (12) zunächst das Dekorbeschichtungsmaterial (9) durch einen separaten Spritzguß- und/oder Schäumvorgang hergestellt und anschließend mit dem Blasformteil (15) verbunden wird.

10. Blasformwerkzeug zur Durchführung des Verfahrens nach Anspruch 1 bis 9, **gekennzeichnet durch** eine von zwei ersten Werkzeugkonturen (4, 5) gebildete Blasformkavität (6) zur Ausformung eines unbeschichteten Blasformteils (15) und eine von zwei zweiten Werkzeugkonturen (7, 8) gebildete Dekorbeschichtungskavität (12) zum Anformen des Dekorbeschichtungsmaterials (9) an die Werkzeugkontur (8), die gegenüber der Blasformkavität im Anformbereich des Dekorbeschichtungsmaterials (9) um dessen Stärke erweitert ist.

11. Blasformwerkzeug nach Anspruch 10, **gekennzeichnet durch** eine dreiteilige Ausbildung aus zwei Seitenteilen (1, 2) und einem zwischen diesen angeordneten Mittelteil (3), die jeweils verfahrbar und/oder verschwenkbar sind, wobei zwischen dem einen Seitenteil (2) und dem Mittelteil (3) die Blasformkavität (6) und zwischen dem anderen Seitenteil (1) und dem Mittelteil (3) die Dekorbeschichtungskavität (12) gebildet ist.

12. Blasformwerkzeug nach Anspruch 10 und 11, **dadurch gekennzeichnet, daß** das Mittelteil (3) in einer zur Bewegungsrichtung (A) der Seitenteile (1, 2) senkrechten Richtung (B) verfahrbar oder verschwenkbar ist.

13. Blasformwerkzeug nach einem der Ansprüche 10 bis 12 **dadurch gekennzeichnet, daß** die Dekorbeschichtungskavität (12) im eine Vakuumkammer integriert ist.

14. Blasformwerkzeug nach Anspruch 13, **dadurch gekennzeichnet, daß** in dem das Dekorbeschichtungsmaterial (9) aufnehmenden Seitenteil (1) im Bereich der Werkzeugkontur (8) mit der Vakuumkammer verbundene Saugöffnungen (10) vorgesehen sind, um den Raum luftleer zu saugen und die Ausbildung von Luftblasen am Fertigteil zu vermeiden.

15. Blasformwerkzeug nach einem der Ansprüche 10 bis 14, **dadurch gekennzeichnet, daß** in der Dekorbeschichtungskavität (12) Heizelemente (11) zur Erwärmung des Dekorbeschichtungsmaterials (9) angeordnet sind.

16. Blasformwerkzeug nach einem der Ansprüche 10 bis 15, **dadurch gekennzeichnet, daß** die erste Werkzeugkontur (5) in der Blasformkavität (6) Mittel zum Halten des Blasformteils (15) nach dessen Lösen von der ersten Werkzeugkontur (4) des Mittelteils (3) aufweist.

17. Blasformwerkzeug nach Anspruch 16, **dadurch gekennzeichnet, daß** die Mittel zum Halten des Blasformteils durch Hinterschneidungen oder Haltekerne gebildet sind.

18. Blasformwerkzeug nach einem der Ansprüche.10 bis 17, **dadurch gekennzeichnet, daß** zur Ausbildung von Hinterschneidungen am Mittelteil (3) mindestens ein in die Blasformkavität (6) gerichteter Schieber vorgesehen ist, wobei das entsprechende Seitenteil schwenkbar angeordnet ist und die Werkzeugbereiche in der Trennung entsprechend abgeschrägt sind.

## Claims

1. Method of producing blow-moulded parts with a decorative coating provided in the visible region, in which during the blow-moulding process a decorative coating material placed in the cavity of a blow-moulding tool formed from two tool halves is formed under pressure onto the blow-moulded part and connected with the surface thereof, **characterised in that** in a multi-stage process an uncoated blow-moulded part (15) is initially formed under pressure in a blow moulding cavity (6) and the decorative coating material (9) is placed or formed at the tool contour (8) in a substantially identically formed decorative coating cavity (12) and is retained at this contour and subsequently is formed onto the outer contour of the blow-moulded part and connected therewith in a tool cavity formed from the tool contours of the blow moulding cavity and the decorative coating cavity.

2. Method according to claim 1, **characterised in that** the decorative coating material (9) is placed against the respective tool contour (8) in the sealed decorative coating cavity (12) under the action of a vacuum.

3. Method according to claim 1 and 2, **characterised in that** the decorative coating material (9) is heated outside or within the decorative coating cavity (12).

4. Method according to one of claims 1 to 3, **characterised in that** the decorative coating material (9) is pre-shaped and is introduced into the decorative coating cavity (12).

5. Method according to one of claims 1 to 4, **characterised in that** the connection between the blow-moulded part (15) and the decorative coating material (9) is produced with use of a bonding agent and/or by the still-hot surface of the blow-moulded part.

6. Method according to one of claims 1 to 5, **characterised in that** a surface, which is suitable for connection with the decorative coating material (9), of the blow-moulded part (15) is created by another surface coating formed by co-extrusion of the starting tube.

7. Method according to one of claims 1 to 6, **characterised in that** a foam material suitable for connection with the decorative coating material (9) is applied beforehand to the rear side of the decorative material and this foam layer is used for connection of the decorative layer and support part.

8. Method according to one of claims 1 to 7, **characterised in that** an air gap, in which a foam material and/or synthetic material is or are introduced for the connecting, is left in the decorative coating cavity (12) between the decorative coating material (9) and the blow-moulded part (15).

9. Method according to one of claims 1 to 8, **characterised in that** the decorative coating material (9) is initially produced in the decorative coating cavity (12) by a separate injection-moulding process and/or foam-moulding process and is subsequently connected with the blow-moulded part (15).

10. Blow-moulding tool for carrying out the method according to claims 1 to 9, **characterised by** a blow-moulding cavity (6), which is formed by two first tool contours (4, 5), for forming an uncoated blow-moulded part (15) and a decorative coating cavity (12), which is formed by two second tool contours (7, 8), for forming the decorative coating material (9) onto the tool contour (8), which is widened relative to the blow-moulding cavity in the moulding-on region of the decorative coating material (9) by the thickness thereof.

11. Blow-moulding tool according to claim 10, **characterised by** a three-part construction of two side members (1, 2) and a centre member (3) arranged therebetween, which are respectively movable and/or pivotable, wherein the blow-moulding cavity (6) is formed between one side member (2) and the centre member (3) and the decorative coating cavity (12) is formed between the other side member (1) and the centre member (3).

12. Blow-moulding tool according to claim 10 and 11, **characterised in that** the centre member (3) is movable or pivotable in a direction (B) perpendicular to the direction (A) of movement of the side members (1, 2).

13. Blow-moulding tool according to one of claims 10 to 12, **characterised in that** the decorative coating cavity (12) is integrated in a vacuum chamber.

14. Blow-moulding tool according to claim 13, **characterised in that** suction openings (10) connected with the vacuum chamber are provided in the side member (1), which receives the decorative coating material (9), in the region of the tool contour (8) in order to suck the space empty of air and to avoid formation of air bubbles at the finished part.

15. Blow-moulding tool according to one of claims 10 to 14, **characterised in that** heating elements (11) for heating the decorative coating material (9) are arranged in the decorative coating cavity (12).

16. Blow-moulding tool according to one of claims 10 to 15, **characterised in that** the first tool contour (5) in the blow-moulding cavity (6) has means for retaining the blow-moulded part (15) after release thereof from the first tool contour (4) of the centre member (3).

17. Blow-moulding tool according to claim 16, **characterised in that** the means for retaining the blow-moulded part are formed by undercuts or retaining cores.

18. Blow-moulding tool according to one of claims 10 to 17, **characterised in that** at least one slide directed into the blow-moulding cavity (6) is provided for the formation of undercuts at the centre member (3), wherein the corresponding side member is arranged to be pivotable and the tool regions are correspondingly chamfered at the separation.

## Revendications

1. Procédé pour la fabrication de pièces soufflées comportant un matériau décoratif prévu en une zone visible, selon lequel, pendant le processus de soufflage, un matériau de revêtement décoratif introduit dans la cavité d'un moule de soufflage constitué de deux demi-outils est mis en forme sous pression contre la pièce soufflée et lié avec sa surface extérieure,
**caractérisé en ce qu'**
en un processus en plusieurs étapes, une pièce soufflée (15) non recouverte est mise en forme sous pression dans une cavité de soufflage (6) et le matériau de revêtement décoratif (9) est appliqué ou mis en forme sur le contour d'outil (8) et maintenu contre celui-ci dans une cavité de revêtement décoratif (12) constituée pour l'essentiel identiquement et, ensuite, mis en forme contre le contour extérieur de la pièce soufflée dans une cavité d'outil formée des contours d'outil de la cavité de revêtement décoratif et de pièces soufflées et liée à celle-ci.

2. Procédé selon la revendication 1,
**caractérisé en ce que**
le matériau de revêtement décoratif (9) est appliqué sur le contour d'outil (8) correspondant par l'effet d'un vide, dans la cavité de revêtement décoratif (12) étanchéisée.

3. Procédé selon la revendication 1 et 2,
**caractérisé en ce que**
le matériau de revêtement décoratif (9) est échauffé à l'extérieur ou à l'intérieur de la cavité de revêtement décoratif (12).

4. Procédé selon l'une quelconque des revendications 1 à 3,
**caractérisé en ce que**
le matériau de revêtement décoratif (9) est préformé et introduit dans la cavité de revêtement décoratif (12).

5. Procédé selon l'une quelconque des revendications 1 à 4,
**caractérisé en ce que**
la liaison entre la pièce soufflée (15) et le matériau de revêtement décoratif (9) est réalisée en employant un moyen adhésif et/ou par la surface extérieure encore chaude de la pièce soufflée.

6. Procédé selon l'une quelconque des revendications 1 à 5,
**caractérisé en ce qu'**
une surface extérieure de la pièce soufflée (15) adaptée à la liaison avec le matériau de revêtement décoratif (9) est créée par une autre couche de surface extérieure formée par co-extrusion du tuyau de départ.

7. Procédé selon l'une quelconque des revendications 1 à 6,
**caractérisé en ce qu'**
un matériau en mousse adapté à la liaison avec le matériau de revêtement décoratif (9) est d'abord déposé sur le côté arrière du matériau décoratif et cette couche de mousse est utilisée pour la liaison couche décorative et pièce porteuse.

8. Procédé selon l'une quelconque des revendications 1 à 7,
**caractérisé en ce qu'**
dans la cavité de revêtement décoratif (12) entre le matériau de revêtement décoratif (9) et la pièce soufflée (15), on aménage une fente d'air dans laquelle un matériau synthétique et/ou un matériau en mousse est introduit pour liaison.

9. Procédé selon l'une quelconque des revendications 1 à 8;
**caractérisé en ce que**
dans la cavité de revêtement décoratif (12), le matériau de revêtement décoratif (9) est fabriqué d'abord par un procédé séparé de moulage par injection et/ou de moussage et ensuite lié à la pièce soufflée (15).

10. Moule de soufflage pour appliquer le procédé selon les revendications 1 à 9,
**caractérisé par**
une cavité de soufflage (6) formée de deux premiers contours d'outil (4, 5) pour la mise en forme d'une pièce soufflée (15) non recouverte et une deuxième cavité de revêtement décoratif (12) formée de deux deuxièmes contours d'outil (7, 8) pour la mise en forme du matériau de revêtement décoratif (9) au contour d'outil (8) qui, par rapport à la cavité de soufflage dans la zone de mise en forme du matériau de revêtement décoratif (9), est augmentée de son épaisseur.

11. Moule de soufflage selon la revendication 10,
**caractérisé par**
une constitution en trois pièces de deux pièces latérales (1, 2) et d'une pièce centrale (3) disposée entre celles-ci qui sont chacune mobile et/ou pivotante, où la cavité de soufflage (6) est formée entre la pièce latérale (2) et la pièce centrale (3) et la cavité de revêtement décoratif (12) entre l'autre pièce latérale (1) et la pièce centrale (3).

12. Moule de soufflage selon la revendication 10 et 11,
**caractérisé en ce que**
la pièce centrale (3) est mobile ou pivotante en une direction perpendiculaire (B), par rapport à la direction de mouvement (A) des pièces latérales (1, 2).

13. Moule de soufflage selon l'une quelconque des revendications 10 à 12,
**caractérisé en ce que**
la cavité de revêtement décoratif (12) est intégrée dans une chambre à vide.

14. Moule de soufflage selon la revendication 13,
**caractérisé en ce que**,
dans la pièce latérale (1) recevant le matériau de revêtement décoratif (9), dans la zone du contour d'outil (8), des ouvertures d'aspiration (10) reliées avec la chambre à vide sont prévues de façon à vider l'espace de l'air et empêcher la formation de bulles d'air sur la pièce finie.

15. Moule de soufflage selon l'une quelconque des revendications 10 à 14,
**caractérisé en ce que**
des éléments de chauffage (11) pour échauffer le matériau de revêtement décoratif (9) sont disposés dans la cavité de revêtement décoratif (12).

16. Moule de soufflage selon l'une quelconque des revendications 10 à 15,
**caractérisé en ce que**
le premier contour d'outil (5) présente, dans la cavité de soufflage (6), des moyens pour maintenir la pièce soufflée (15) après sa séparation du premier contour d'outil (4) de la pièce centrale (3).

17. Moule de soufflage selon la revendication 16,
**caractérisé en ce que**
les moyens pour maintenir la pièce soufflée sont formés par des contre-dépouilles ou des noyaux de maintien.

18. Moule de soufflage selon l'une quelconque des revendications 10 à 17,
**caractérisé en ce que**
pour former des contre-dépouilles à la pièce centrale (3), au moins un tiroir aligné dans la cavité de soufflage (6) est prévu, la pièce latérale correspondante étant disposée de manière pivotante, et les zones d'outils à la séparation étant biseautées de manière correspondante.
